# EUROPÄISCHE PATENTSCHRIFT

(11) **EP 1 238 849 B1**
(45) Veröffentlichungstag und Bekanntmachung des Hinweises auf die Patenterteilung: **15.05.2013**
(21) Anmeldenummer: 02004737.9
(22) Anmeldetag: 01.03.2002
(51) Int. Cl.: B60K 37/00, B60R 16/02

(54) **Instrumententafel für ein Kraftfahrzeug**
Instrument panel for a motor vehicle
Planche de bord pour véhicule à moteur

(30) Priorität: 07.03.2001 DE 10111024; 31.05.2001 DE 10126705
(43) Veröffentlichungstag der Anmeldung: 11.09.2002
(73) Patentinhaber: Continental Automotive GmbH, 30165 Hannover (DE)
(72) Erfinder: Möll, Winfried, 35321 Laubach-Röthges (DE)

(56) Entgegenhaltungen:
- EP-A- 0 334 343
- EP-A- 1 076 341
- DE-A- 4 139 434
- FR-A- 2 365 893
- PATENT ABSTRACTS OF JAPAN vol. 1998, no. 10, 31. August 1998 (1998-08-31) -& JP 10 136541 A (HARNESS SOGO GIJUTSU KENKYUSHO:KK;SUMITOMO WIRING SYST LTD; SUMITOMO E), 22. Mai 1998 (1998-05-22)
- PATENT ABSTRACTS OF JAPAN vol. 1998, no. 05, 30. April 1998 (1998-04-30) & JP 10 016688 A (INOAC CORP), 20. Januar 1998 (1998-01-20)

## Beschreibung

Die Erfindung betrifft eine Instrumententafel für ein Kraftfahrzeug mit zumindest einem auf einem Träger angeordneten elektronischen Bauteil und/oder einem Steckerteil, mit elektrischen, mit dem elektronischen Bauteil und/oder dem Steckerteil leitend verbundenen Leitungen.

Solche Instrumententafeln werden in heutigen Kraftfahrzeugen häufig im Bereich eines Armaturenbretts eingesetzt und sind aus der Praxis bekannt. Die elektronischen Bauteile sind beispielsweise als Tachometer, Drehzahlmesser oder Steuereinrichtung ausgebildet und auf die auf dem Träger befestigten Steckerteile aufgesteckt oder unmittelbar auf dem Träger befestigt. An den Steckerteilen lassen sich auch von dem Armaturenbrett wegführende Leitungen aufstecken. In der Regel werden mehrere Leitungen in einem Kabelbaum vormontiert und einzeln mit Kontakten der elektronischen Bauteile oder der Steckerteile verbunden. Anschließend wird der Kabelbaum auf dem Träger befestigt. Die im Kabelbaum verlegten elektrischen Leitungen sind einzeln elektrisch isoliert.

Nachteilig bei der bekannten Instrumententafel ist, dass sich die Montage der Leitungen sehr aufwändig gestaltet und nicht automatisieren lässt.

Einen Vorschlag zur Verringerung der Bauteilanzahl zur Befestigung und zum Schutz eines Kabelstrangs offenbart JP 10136541 A. Ferner ist aus DE 41 39 434 A1 ein elektrischer Verkabelungsaufbau zur Verbindung von elektrischen Fahrzeugkomponenten und einem Armaturenbrett bekannt, wobei ein in einen ersten elektrischen Verkabelungsteilabschnitt und einen zweiten elektrischen Verkabelungsteilabschnitt aufgeteiltes elektrisches Verkabelungsteil vorgesehen ist. Den Stand der Technik nach dem Oberbegriff des Anspruchs 1 stellt hier die JP 10136541.

Der Erfindung liegt das Problem zugrunde, eine Instrumententafel der eingangs genannten Art so zu gestalten, dass sie möglichst einfach und kostengünstig montierbar ist.

Dieses Problem wird erfindungsgemäß gelöst mit den Merkmalen des Anspruchs 1.

Durch diese Gestaltung lassen sich die elektrischen Leitungen einzeln an den Kontaktstiften zuverlässig mechanisch befestigen und beispielsweise zu einem Haupt-Steckerteil der erfindungsgemäßen Instrumententafel spannen. Die Anordnung mehrerer Leitungen in einem Kabelbaum ist dank der Erfindung nicht erforderlich. Da die Stifte leicht zugänglich sind und sich in ihrer Lage mit einer hohen Genauigkeit festlegen lassen, kann die Montage der Leitungen zudem automatisiert werden. Die erfindungsgemä-βe Instrumententafel lässt sich daher besonders kostengünstig montieren.

Die Kontaktstifte vermögen große Zugkräfte von den Leitungen abzustützen, da sie quer zur längsten Erstreckung der Leitungen angeordnet sind.

Die Enden der elektrischen Leitungen könnten beispielsweise mit den Kontaktstiften verschraubt oder verklemmt werden. Die Befestigung der Leitungen an den Kontaktstiften hat jedoch gemäß einer vorteilhaften Weiterbildung der Erfindung eine zuverlässige elektrische Kontaktierung und eine hohe mechanische Stabilität, wenn eine Verbindung der Enden der elektrischen Leitungen mit den Kontaktstiften stoffschlüssig gestaltet ist. Als stoffschlüssige Verbindung eignet sich beispielsweise das Schweißen oder Löten.

Die Stellen, an denen mechanische Belastungen der Leitungen in die Kontaktstifte eingeleitet werden, lassen sich gemäß einer anderen vorteilhaften Weiterbildung der Erfindung einfach von den Stellen, an denen die elektrische Kontaktierung stattfindet, räumlich trennen, wenn die Kontaktstifte von den Enden der elektrischen Leitungen umwickelt sind. Ein weiterer Vorteil dieser Gestaltung besteht darin, dass die Verbindung der Leitung an den Kontaktstiften insbesondere bei einer Automatisierung besonders schnell und kostengünstig erfolgen kann.

Zwischen Steckerteilen und elektronischen Bauteilen angeordnete elektrische Verbindungen gestalten sich konstruktiv besonders einfach, da die elektrischen Leitungen zwischen zwei Kontaktstiften gespannt sind.

Die Montage der Kontaktstifte gestaltet sich gemäß einer anderen vorteilhaften Weiterbildung der Erfindung besonders einfach, wenn sie in dem Träger eingepresst sind.

Die elektrischen Leitungen könnten wie bei der bekannten Instrumententafel einzeln elektrisch isoliert werden. Die elektrische Isolation der Leitungen gestaltet sich gemäß einer anderen vorteilhaften Weiterbildung der Erfindung besonders kostengünstig, wenn die elektrischen Leitungen von auf dem Träger angeordnetem Kunststoffschaum isoliert und in einer räumlich voneinander getrennten Lage gehalten sind. Hierdurch kann auf die Anordnung von Isolierschichten auf jeder einzelnen Leitung verzichtet werden. Der Kunststoffschaum ist meist ohnehin für die Formgebung des die Instrumententafel aufweisenden Armaturenbretts erforderlich.

Die erfindungsgemäße Instrumententafel gestaltet sich besonders kompakt, wenn mehrere elektrische Leitungen in einer gemeinsamen Ebene angeordnet sind.

Die Montage der Kontaktstifte gestaltet sich gemäß einer anderen vorteilhaften Weiterbildung der Erfindung besonders kostengünstig, wenn Kontaktstifte und das Steckerteil und/oder das elektronische Bauteil als vormontierbare bauliche Einheit gestaltet sind. Hierdurch lässt sich ein eigener Arbeitsgang zur Montage der Kontaktstifte auf dem Träger vermeiden.

Die elektrischen Leitungen lassen sich gemäß einer anderen vorteilhaften Weiterbildung der Erfindung einfach um Höhenunterschiede des Trägers herum oder über diese hinweg verlegen, wenn auf dem Träger Führungselemente für die elektrischen Leitungen angeordnet sind. An diesen Führungselementen lassen sich die elektrischen Leitungen umlenken.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine Schnittdarstellung durch einen Teilbereich eines Armaturenbretts mit einer erfindungsgemäßen Instrumententafel,
- Fig.2: eine Schnittdarstellung durch eine weitere Ausführungsform der erfindungsgemäßen Instrumententafel,
- Fig.3: eine Draufsicht auf eine weitere Ausführungsform der Instrumententafel,
- Fig.4: eine Schnittdarstellung durch die Instrumententafel aus Figur 3 entlang der Linie IV - IV

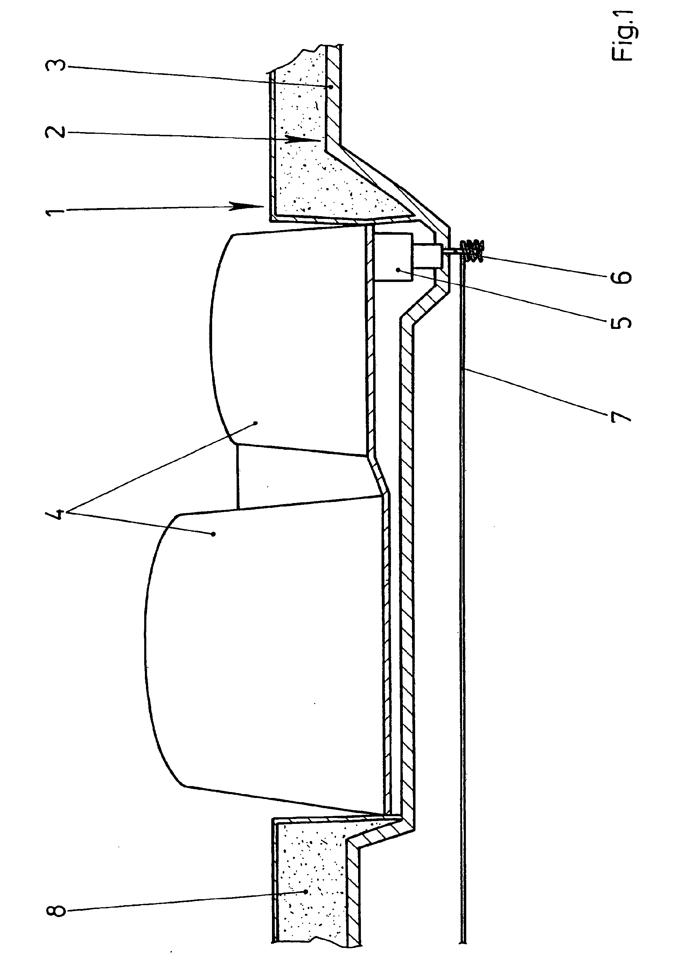

Figur 1 zeigt eine Schnittdarstellung durch ein Armaturenbrett 1 für ein Kraftfahrzeug mit einer Instrumententafel 2. Die Instrumententafel 2 hat einen aus elektrisch nichtleitendem Kunststoff gefertigten Träger 3. Auf dem Träger 3 sind zwei als Messwerke ausgebildete elektronische Bauteile 4 angeordnet. Die als Messwerke ausgebildeten elektronischen Bauteile 4 können beispielsweise ein Drehzahlmesser und ein Tachometer sein. Die elektronischen Bauteile 4 weisen einen Anschluss 5 auf und sind mit einem den Träger 3 durchdringenden Kontaktstift 6 verbunden. Der Kontaktstift 6 ist beispielsweise in den Träger 3 eingepresst. Auf der den elektronischen Bauteilen 4 abgewandten Seite des Trägers 3 ist eine elektrische Leitung 7 an dem Kontaktstift 6 befestigt. Das Ende der elektrischen Leitung 7 ist dabei um den Kontaktstift 6 herumgewickelt und/oder mit diesem verschweißt oder verlötet. Die elektrische Leitung 7 ist zu einem nicht dargestellten Anschluss der Instrumententafel 2 verlegt. Zur Vereinfachung der Zeichnung ist nur ein einziger Kontaktstift 6 mit einer einzigen elektrischen Leitung 7 dargestellt. Selbstverständlich können sämtliche für die Kontaktierung des elektronischen Bauteils 4 vorgesehenen Verbindungen jeweils einen dargestellten Kontaktstift 6 aufweisen. Weiterhin zeigt Figur 1, dass auf der die elektronischen Bauteile 4 aufweisenden Seite des Trägers 3 ein Kunststoffschaum 8 aufgebracht ist. Die Leitung 7 ist auf der den elektronischen Bauteilen 4 des Trägers 3 abgewandten Seite isoliert.

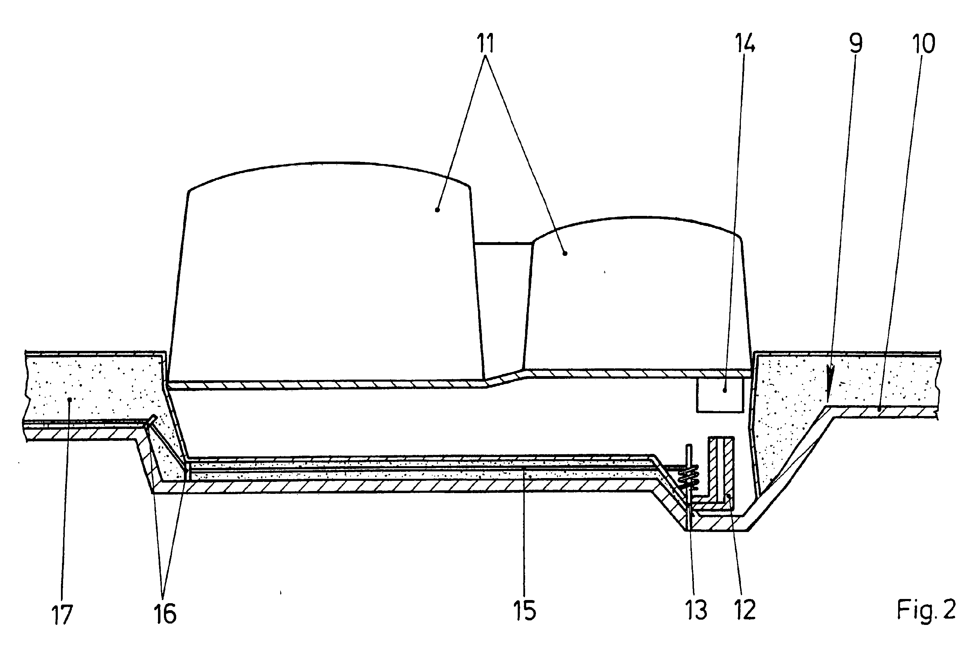

Figur 2 zeigt eine Instrumententafel 9 mit einem Träger 10 vor der Montage von als Messwerke ausgebildeten elektronischen Bauteilen 11. Auf dem Träger 10 ist ein Steckerteil 12 mit einem Kontaktstift 13 befestigt. Das Steckerteil 12 dient zur Verbindung mit einem entsprechend gestalteten Steckerteil 14 der elektronischen Bauteile 11. Ein Ende einer elektrischen Leitung 15 ist um den Kontaktstift 13 herumgewickelt. Die elektrische Leitung 15 ist auf der den elektronischen Bauteilen 11 zugewandten Seite des Trägers 10 angeordnet und wird entlang mehrerer Führungselemente 16 verlegt, beispielsweise gespannt. Im Bereich der elektrischen Leitung 15 weist der Träger 10 eine Schicht Kunststoffschaum 17 auf. Dieser Kunststoffschaum 17 isoliert die elektrische Leitung 15. Mehrere zu verlegende elektrischen Leitungen 15 benötigen daher keine eigene Isolation.

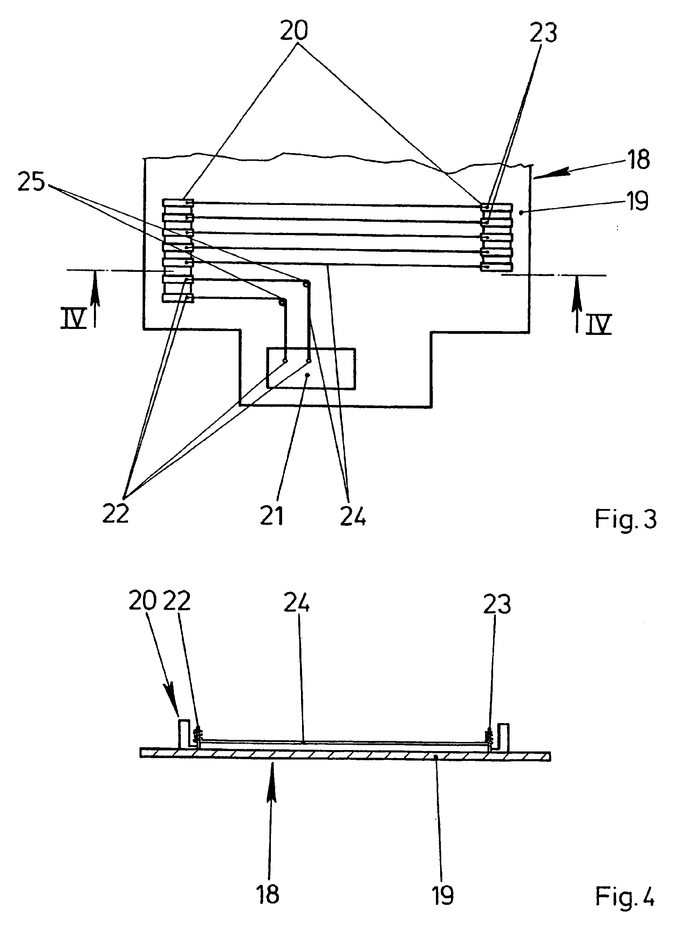

Figur 3 zeigt einen Teilbereich einer Instrumententafel 18 in einer Draufsicht, bei dem auf einem Träger 19 zwei Steckerteile 20 und ein als Bordnetzsteuerung ausgebildetes elektronisches Bauteil 21 befestigt sind. Das elektronische Bauteil 21 kann selbstverständlich weitere nicht dargestellte Kontakte aufweisen. Die Steckerteile 20 und das elektronische Bauteil 21 weisen jeweils Kontaktstifte 22, 23 auf, an denen elektrische Leitungen 24 befestigt sind. Weiterhin sind auf dem Träger 19 Führungselemente 25 zur Führung der elektrischen Leitungen 24 angeordnet. Figur 4 zeigt in einer Schnittdarstellung durch die Instrumententafel 18 aus Figur 3 entlang der Linie IV - IV, dass die elektrischen Leitungen 24 in einer Ebene angeordnet sind.

## Patentansprüche

1. Instrumententafel (2) für ein Kraftfahrzeug mit zumindest einem auf einem Träger (3, 10, 19) angeordneten und mit Kontaktstiften (6, 13, 22, 23) verbundenen elektronischen Bauteil (4, 11, 21) und/oder einem Steckerteil (14, 20), mit elektrischen, mit Kontaktstiften (6, 13, 22, 23) leitend verbundenen Leitungen (7, 15, 24), wobei die elektrischen Leitungen (7, 15, 24) an den Kontaktstiften (6, 13, 22, 23) befestigt sind, **dadurch gekennzeichnet, dass** der Träger (3, 10, 19) die Kontaktstifte (6, 13, 22, 23) aufweist, dass die Kontaktstifte (6, 13, 22, 23) von dem Träger (3, 10, 19) hervorstehen und quer zur längsten Erstreckung der Leitungen (7, 15, 24) angeordnet sind und dass die elektrischen Leitungen (7, 15, 24) zwischen zwei Kontaktstiften (6, 13, 22, 23) gespannt sind.

2. Instrumententafel nach Anspruch 1 oder 2, **dadurch gekennzeichnet, dass** eine Verbindung der Enden der elektrischen Leitungen (7, 15, 24) mit den Kontaktstiften (6, 13, 22, 23) stoffschlüssig gestaltet ist.

3. Instrumententafel nach zumindest einem der vorhergehenden Ansprüche, **dadurch gekennzeichnet, dass** die Kontaktstifte (6, 13, 22, 23) von den Enden der elektrischen Leitungen (7, 15, 24) umwickelt sind.

4. Instrumententafel nach zumindest einem der vorhergehenden Ansprüche, **dadurch gekennzeichnet, dass** die Kontaktstifte (6, 13, 22, 23) in dem Träger (3, 10, 19) eingepresst sind.

5. Instrumententafel nach zumindest einem der vorhergehenden Ansprüche, **dadurch gekennzeichnet, dass** die elektrischen Leitungen (15) von auf dem Träger (10) angeordnetem Kunststoffschaum (17) isoliert und in einer räumlich voneinander getrennten Lage gehalten sind.

6. Instrumententafel nach zumindest einem der vorhergehenden Ansprüche, **dadurch gekennzeichnet, dass** mehrere elektrische Leitungen (7, 15, 24) in einer gemeinsamen Ebene angeordnet sind.

7. Instrumententafel nach zumindest einem der vorhergehenden Ansprüche, **dadurch gekennzeichnet, dass** Kontaktstifte (6, 13, 22, 23) und das Steckerteil (12, 20) und/oder das elektronische Bauteil (4, 11, 21) als vormontierbare bauliche Einheit gestaltet sind.

8. Instrumententafel nach zumindest einem der vorhergehenden Ansprüche, **dadurch gekennzeichnet, dass** auf dem Träger (3, 10, 19) Führungselemente (16, 25) für die elektrischen Leitungen (15, 24) angeordnet sind.

## Claims

1. Instrument panel (2) for a motor vehicle having at least one electronic component (4, 11, 21) which is arranged on a carrier (3, 10, 19) and connected to contact pins (6, 13, 22, 23), and/or one plug part (14, 20), having electrical leads (7, 15, 24) which are conductively connected to contact pins (6, 13, 22, 23), wherein the electrical leads (7, 15, 24) are attached to the contact pins (6, 13, 22, 23), **characterized in that** the carrier (3, 10, 19) has the contact pins (6, 13, 22, 23), **in that** the contact pins (6, 13, 22, 23) protrude from the carrier (3, 10, 19) and are arranged transversely with respect to the longitudinal extent of the leads (7, 15, 24) and **in that** the electrical leads (7, 15, 24) are stretched between two contact pins (6, 13, 22, 23).

2. Instrument panel according to Claim 1, **characterized in that** a connection of the ends of the electrical leads (7, 15, 24) to the contact pins (6, 13, 22, 23) is embodied as a materially joined connection.

3. Instrument panel according to at least one of the preceding claims, **characterized in that** the ends of the electrical leads (7, 15, 24) are wound around the contact pins (6, 13, 22, 23).

4. Instrument panel according to at least one of the preceding claims, **characterized in that** the contact pins (6, 13, 22, 23) are pressed into the carrier (3, 10, 19).

5. Instrument panel according to at least one of the preceding claims, **characterized in that** the electrical leads (15) are insulated by plastic foam (17) which is arranged on the carrier (10), and are secured in a position in which they are spatially separated from one another.

6. Instrument panel according to at least one of the preceding claims, **characterized in that** a plurality of electrical leads (7, 15, 24) are arranged in a common plane.

7. Instrument panel according to at least one of the preceding claims, **characterized in that** contact pins (6, 13, 22, 23) and the plug part (12, 20) and/or the electronic component (4, 11, 21) are embodied as a premountable physical unit.

8. Instrument panel according to at least one of the preceding claims, **characterized in that** guide elements (16, 25) for the electrical leads (15, 24) are arranged on the carrier (3, 10, 19).

## Revendications

1. Planche (2) de bord pour un véhicule automobile ayant au moins un composant (4, 11, 21) électronique disposé sur un support (3, 10, 19) et relié à des broches (6, 13, 22, 23) de contact et/ou à une partie (14, 20) formant connecteur, ayant des conducteurs (7, 15, 24) électriques reliés de manière conductrice à des broches (6, 13, 22, 23) de contact, les conducteurs (7, 15, 24) électriques étant fixés aux broches (6, 13, 22, 23) de contact, **caractérisée en ce que** le support (3, 10, 19) comporte les broches (6, 13, 22, 23) de contact, **en ce que** les broches (6, 13, 22, 23) de contact dépassent du support (3, 10, 19) et sont disposées transversalement à l'étendue la plus longue des conducteurs (7, 15, 24) et **en ce que** les conducteurs (7, 15, 24) électriques sont tendus entre deux broches (6, 13, 22, 23) de contact.

2. Planche de bord suivant la revendication 1, **caractérisée en ce qu'**une liaison des extrémités des conducteurs (7, 15, 24) électriques avec les broches (6, 13, 22, 23) de contact est conformée à complémentarité de matière.

3. Planche de bord suivant au moins l'une des revendications précédentes, **caractérisée en ce que** les broches (6, 13, 22, 23) de contact sont enveloppées par les extrémités des conducteurs (7, 15, 24) électriques.

4. Planche de bord suivant au moins l'une des revendications précédentes, **caractérisée en ce que** les broches (6, 13, 22, 23) de contact sont incorporées par pression dans le support (3, 10, 19).

5. Planche de bord suivant au moins l'une des revendications précédentes, **caractérisée en ce que** les conducteurs (15) électriques sont isolés par de la mousse (17) de matière plastique mise sur le support (10) et sont maintenus en position en étant séparés l'un de l'autre dans l'espace.

6. Planche de bord suivant au moins l'une des revendications précédentes, **caractérisée en ce que** plusieurs conducteurs (7, 15, 24) électriques sont disposés dans un plan commun.

7. Planche de bord suivant au moins l'une des revendications précédentes, **caractérisée en ce que** les broches (6, 13, 22, 23) de contact et la partie (12, 20) formant connecteur et/ou le composant (4, 11, 21) électronique sont conformés sous la forme d'une unité de construction pouvant être montée à l'avance.

8. Planche de bord suivant au moins l'une des revendications précédentes, **caractérisée en ce que** sur le support (3, 10, 19) sont disposés des éléments (16, 25) de guidage des conducteurs (15, 24) électriques.
